Europäisches Patentamt

European Patent Office

Office européen des brevets

(11) Numéro de publication : **0 326 475 B1**

# FASCICULE DE BREVET EUROPEEN

(45) Date de publication du fascicule du brevet :
**15.01.92 Bulletin 92/03**

(51) Int. Cl.$^5$ : **G01K 11/00,** G01D 5/26

(21) Numéro de dépôt : **89400188.2**

(22) Date de dépôt : **24.01.89**

(54) **Capteur de température multipoints à fibre optique.**

(30) Priorité : **25.01.88 FR 8800780**

(43) Date de publication de la demande :
**02.08.89 Bulletin 89/31**

(45) Mention de la délivrance du brevet :
**15.01.92 Bulletin 92/03**

(84) Etats contractants désignés :
**BE DE GB IT LU NL**

(56) Documents cités :
**FR-A- 2 595 820**
**GB-A- 2 189 880**
**ELECTRONICS LETTERS, vol. 21, no. 4, 14
février 1985, pages 148-149, Stevenage, Herts,
GB; M. CORKE et al.: "Combined Michelson
and polarimetric fibre-optic interferometric
sensor"**
**JOURNAL OF LIGHTWAVE TECHNOLOGY,
vol. LT-5, no. 7, juillet 1987, pages 932-940,
New York, US; I. SAKAI et al.: "Multiplexing of
optical fiber sensors using a frequencymodulated source and gated output"**

(73) Titulaire : **THOMSON-CSF
51, Esplanade du Général de Gaulle
F-92800 Puteaux (FR)**

(72) Inventeur : **Lefevre, Hervé
THOMSON-CSF SCPI 19, avenue de Messine
F-75008 Paris (FR)**
Inventeur : **Bettini, Jean-Pierre
THOMSON-CSF SCPI 19, avenue de Messine
F-75008 Paris (FR)**
Inventeur : **Botti, Serge
THOMSON-CSF SCPI 19, avenue de Messine
F-75008 Paris (FR)**
Inventeur : **Turpin, Marc
THOMSON-CSF SCPI 19, avenue de Messine
F-75008 Paris (FR)**

(74) Mandataire : **Turlèque, Clotilde et al
THOMSON-CSF SCPI
F-92045 PARIS LA DEFENSE CEDEX 67 (FR)**

## Description

L'invention se rapporte à un capteur de température utilisant des fibres optiques et la propriété de celles-ci d'avoir une biréfringence variable en fonction de la température.

Une fibre monomode à conservation de polarisation linéaire est obtenue en créant une forte biréfringence élasto-optique à partir d'une zone créant des contraintes intrinsèques, dans une fibre monomode. Un exemple classique de telle fibre a la structure suivante : deux barreaux extrêmement dopés sont placés de chaque côté du coeur. Au fibrage, les différents verres sont d'abord visqueux puis se solidifient. En se refroidissant jusqu'à la température ambiante les barreaux dopés qui ont un coefficient de dilatation thermique bien supérieur à celui du reste de la structure, se contractent et placent donc la région du coeur en contrainte d'extension. Par effet élasto-optique cette contrainte crée de la biréfringence.

Cette biréfringence est souvent définie par la longueur de battement $L_B$, c'est-à-dire la longueur au bout de laquelle les polarisations suivant les deux axes neutres de la fibre, orthogonales, se sont déphasées de 2¶Rad. Cette longueur est typiquement de l'ordre de 1 à 5 mm. L'origine de cette contrainte est donc le refroidissement de la structure inhomogène et dépend de la température. Cette dépendance est de l'ordre de $10^{-3}/°C$.

Le capteur de température multipoints à fibre optique selon l'invention utilise cette propriété de variation de la biréfringence en fonction de la température pour permettre la mesure de température.

Selon l'invention, un capteur de température multipoints, à fibre optique est caractérisé en ce qu'il comporte :

— une source optique à large bande, type diode super-luminescente par exemple, polarisée linéairement, qui peut être modulée en impulsions,

— une fibre optique capteur, monomode et biréfringente sur laquelle ont été créés des points de couplage faible localisés et espacés le long de la fibre, et dont la face d'entrée est couplée à la source, l'axe de polarisation de la source étant aligné avec un axe neutre de la fibre,

— des moyens de polarisation couplés à la face de sortie de la fibre, pour aligner les polarisations des ondes transmises par la fibre, (et rendre possible leur interférence),

— un dispositif d'analyse par spectroscopie couplé à la sortie des moyens de polarisation, pour analyser le rayonnement transmis et former la fonction de transmission du capteur,

— et des moyens de traitement qui à partir de la fonction de transmission extraient les mesures des températures des segments de fibres entre points de couplage.

L'invention sera mieux comprise et d'autres caractéristiques apparaîtront à l'aide de la description qui suit en référence aux figures annexées.

— La figure 1 est un schéma illustrant le fonctionnement d'une fibre optique biréfringente en tant qu'interféromètre ;

— La figure 2 représente la loi de transmission en fonction de l'inverse de la longueur d'onde d'un tel interféromètre ;

— La figure 3 représente le spectre d'une source large et la loi de transmission en fonction de l'inverse de la longueur d'onde, de l'interféromètre ;

— La figure 4 illustre les trains d'onde en sortie du polariseur placé en sortie d'une fibre capteur biréfringente comportant plusieurs points de couplage ;

— La figure 5 représente un premier mode de réalisation du capteur selon l'invention ;

— La figure 6 représente un second mode de réalisation du capteur selon l'invention.

Si l'on considère une fibre optique dans laquelle la longueur de battement $L_B$ est égale à 1 mm, il y a 1000 $L_B$ pour 1 m de fibre, et lorsque la dépendance thermique de la biréfringence est $10^{-3}/°C$, une variation de 1°C produit une variation de déphasage en sortie entre les deux polarisations propres, égale à 2¶Rad et correspondant à un déplacement d'une frange si l'on crée des interférences entre ces deux ondes.

Cet effet est donc extrêmement sensible et peut être mesuré dans un montage interférométrique.

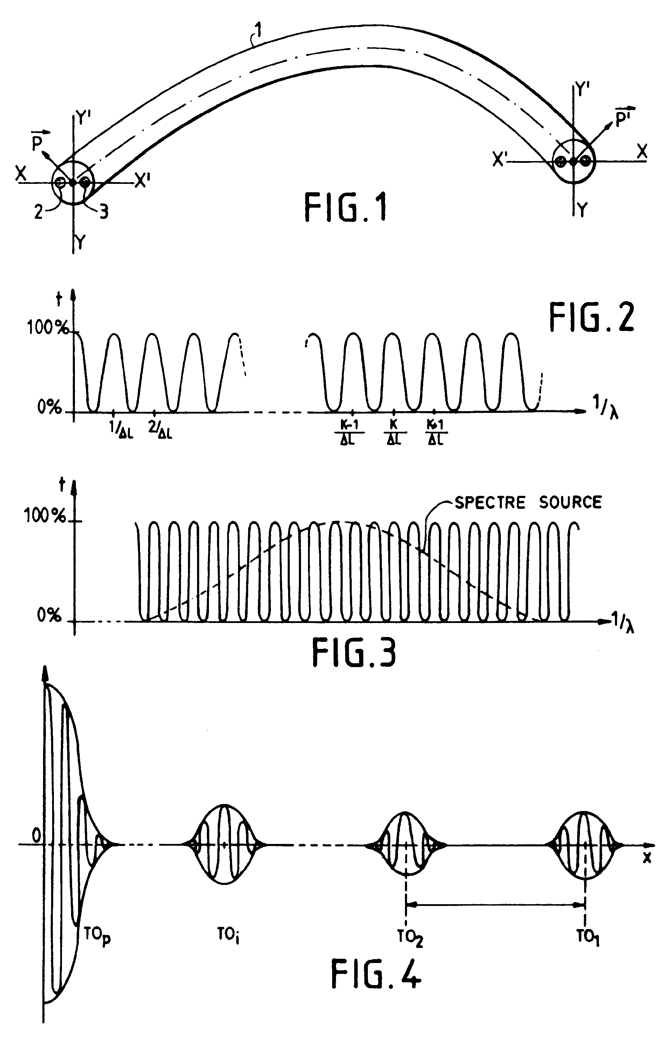

Sur la figure 1 on a représenté une fibre optique monomode à conservation de polarisation, 1, pour laquelle la biréfringence est obtenue grâce à deux barreaux de contrainte 2, 3 fortement dopés qui déterminent les directions des deux axes neutres XX' et YY' de la fibre. Lorsqu'une telle fibre reçoit un rayonnement polarisé selon $\overline{P}$, à 45° des axes neutres de la fibre, qui se répartit donc également entre le mode lent et le mode rapide correspondant aux deux axes neutres, la propagation des deux ondes se fait à des vitesses différentes du fait de la biréfringence. En sortie de la fibre les deux modes peuvent être recombinés au moyen d'un polariseur à 45° des axes neutres, suivant $\overline{P}$.

Dans un tel montage, comme dans un interféromètre classique à deux chemins distincts, la puissance de sortie du rayonnement varie en fonction du cosinus du déphasage entre les deux modes, et donc en fonction de la température.

Ce système a également des propriétés de filtrage chromatique. En effet, s'il n'y avait pas de dispersion, la biréfringence créerait une différence de chemin optique $\Delta1$ entre les deux modes propres, la lumière est transmise si $\Delta1 = k\lambda$ et éteinte si $\Delta1 = (2k + 1) \lambda/2$, où $\lambda$ est la longueur d'onde du rayonnement optique. La loi de transmission correspondante en fonction de 1/λ est représentée sur la figure 2.

Lorsque la biréfringence varie, la loi de transmission se décale : si le système est analysé avec une raie monochromatique de longueur d'onde $\lambda_o$ on retrouve le résultat selon lequel en faisant varier la biréfringence, la transmission à une longueur d'onde donnée $\lambda_o$ varie selon une loi sinusoïdale.

Si au lieu d'une source monochromatique la source est à spectre large, les cannelures de la fonction de transmission seront beaucoup plus resserrées. A la sortie on obtient donc le produit de la loi de transmission cannelée par le spectre de la source, c'est-à-dire un spectre cannelé qui peut être analysé par toutes les méthodes classiques de spectroscopie: prisme dispersif, réseau, spectroscopie par transformée de Fourier etc. Le spectre d'une source large bande et la loi de transmission cannelée sont représentés sur la figure 3, en fonction de 1/λ.

La spectroscopie par transformée de Fourier en particulier utilise un interféromètre dont on fait varier la différence de marche : on retrouve un signal quand le décalage entre les deux bras de l'interféromètre correspond au pas des cannelures (dans l'espace des fréquences) c'est-à-dire quand ce décalage compense celui du premier interféromètre dont on analyse la fonction de transmission.

Du point de vue de l'analyse, placer deux interféromètres de décalages similaires revient à mettre en série deux filtres ayant des pas de cannelures identiques. Une petite variation du déphasage dans l'un ou l'autre des interféromètres décale la position relative des cannelures : quand elles sont en coïncidence la lumière passe, mais on a un minimum de transmission, quand elles sont en anti-coïncidence.

Le capteur de température multipoints selon l'invention utilise une telle source à spectre large, polarisée linéairement, et modulée en impulsions couplée à une fibre monomode biréfringente, selon l'axe de biréfringence. Des points de couplage faible sont répartis le long de la fibre. Si le train d'onde est couplé dans le mode rapide en entrée, on aura en sortie un train d'onde resté dans le mode rapide, et une série de trains d'onde dans le mode lent créés aux différents points de couplage. Les couplages localisés répartis le long de la fibre sont faibles pour pouvoir négliger les trains d'onde provenant de couplages multiples, par exemple le train d'onde couplé en mode lent au premier point de couplage et recouplé dans le mode rapide au point de couplage suivant etc...

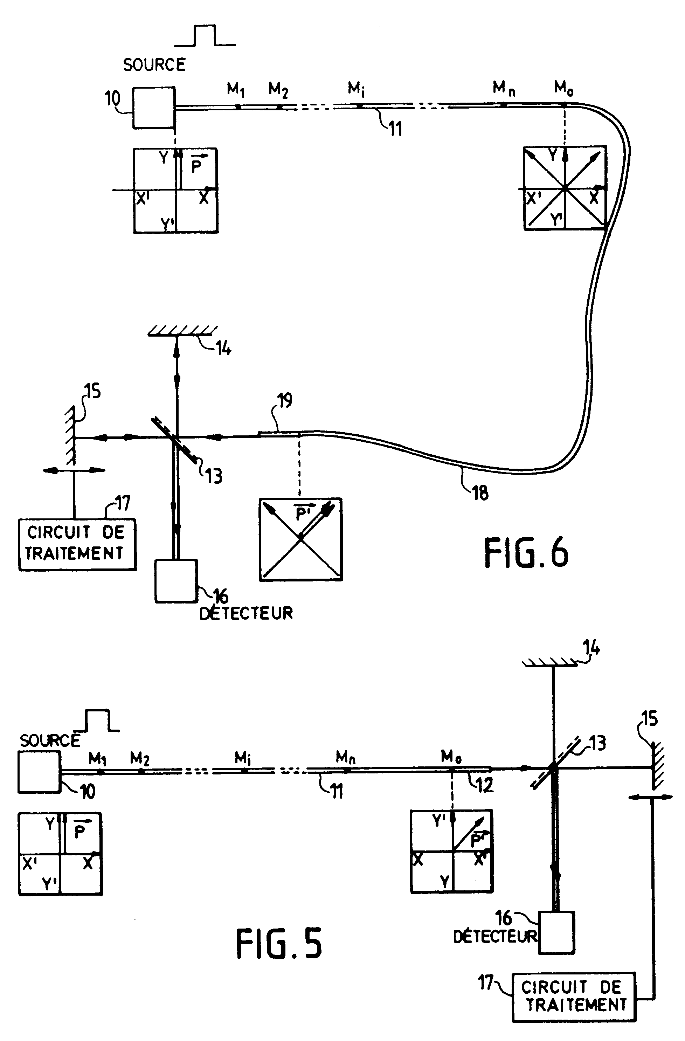

Un polariseur à 45° des axes neutres placé en sortie de la fibre permet de réaligner dans le même état de polarisation le train d'onde principal $TO_P$ et les trains d'onde couplés aux points $M_1$, $M_2$,... $M_i$, respectivement $TO_1$, $TO_2$, ..., $TO_i$. La figure 4 représente ces trains d'onde successivement détectés en fonction du déplacement x d'un interféromètre balayable. Le décalage entre le train d'onde principal $TO_P$ et un train d'onde, couplé soit $TO_i$, est fonction de la biréfringence entre le point de couplage $M_i$ et l'extrémité de la fibre.

Par différence, la distance entre les trains d'onde $TO_i$ et $TO_{i+1}$ correspond à la biréfringence entre les points de couplage $M_i$ et $M_{i+1}$, elle-même fonction de la température du segment de fibre $M_i$ $M_{i+1}$.

L'intensité des couplages aux points de couplage $M_i$ n'intervient pas ; seule compte la distance entre ces deux points, les décalages entre trains d'onde étant directement proportionnels aux écarts de température. Une solution particulière intéressante est d'avoir des points $M_i$ régulièrement espacés.

Ce système à plusieurs points de couplage présente une transmission avec des cannelures dans le spectre, les fréquences spatiales des cannelures créées par les différents points étant différentes. Les couplages étant faibles, l'extinction n'est pas complète, c'est-à-dire qu'on n'obtient jamais zéro dans la fonction de transmission.

L'analyse de la fonction de transmission d'un tel "filtre" complexe permet donc l'analyse de la biréfringence, et donc de la température de chaque segment $M_i$ $M_{i+1}$.

Une méthode d'analyse par spectroscopie bien adaptée à ce cas est l'utilisation d'un interféromètre de Michelson, balayable.

Pour réaliser les points de couplage, une méthode intéressante consiste à tordre la fibre élastiquement, puis à la chauffer localement au moyen d'un arc électrique, d'un chalumeau, ou d'une source laser... La torsion se relache au point de chauffe, créant ainsi une rotation des axes neutres et donc un couplage localisé, sans pour autant induire de pertes puisque le coeur de la fibre n'est pas interrompu.

La figure 5 est un schéma d'un premier mode de réalisation du capteur de température multipoints à fibre optique selon l'invention.

La source à spectre large 10 du type diode superluminescente, polarisée linéairement par construction ou associée à un polariseur, est couplée, selon un axe de biréfringence, l'axe rapide par exemple à une fibre optique biréfringente 11 comportant un certain nombre de points de couplage faible, localisés, $M_1$, $M_2$... $M_i$... Un polariseur 12 est couplé à la sortie de la fibre à 45° des axes neutres de cette fibre, pour aligner les trains d'onde. La lumière issue de ce polariseur est alors transmise à un interféromètre de Michelson balayable comportant un élément séparateur 13 et deux miroirs de renvoi, 15 et 14 recevant respectivement les ondes transmises et réfléchies par le séparateur. L'un des miroirs 15 est déplaçable le long de l'axe optique du faisceau qu'il reçoit, et ce déplacement permet de faire apparaître sur un détecteur 16 des maximum de la fonction de transmission dont l'espacement est comme indiqué ci-dessus, fonction de la température. Un circuit de traitement, 17, transforme les déplacements en mesures de température.

L'invention n'est pas limitée au mode de réalisation décrit ci-dessus. En particulier, il peut être intéressant d'éloigner la fibre capteur des moyens de détection et de mesure plutôt que de les placer en sortie de la fibre capteur. Pour cela, comme représenté sur la figure 6 où les mêmes éléments ont été désignés par les mêmes repères, on connecte à la face de sortie de la fibre capteur 11 une fibre à conservation de polarisation 18 d'axe à 45° des axes neutres de la fibre capteur, et on place un polariseur 19 à l'extrémité de cette fibre de renvoi, aligné sur les axes neutres de la fibre à conservation de polarisation, l'ensemble formé par la fibre 18 et le polariseur 19 étant équivalent au polariseur 12 de la figure 5. Ce mode de réalisation permet de déporter la partie capteur fibre 11 des moyens de détection et de mesure.

Par ailleurs la source à spectre large peut être soit une diode super-luminescente dite "DSL" comme indiqué ci-dessus, soit une source laser dans laquelle on élargit le spectre artificiellement.

Ce type de capteur de température peut fonctionner pour des températures variant entre −20°C et +100°C lorsque la fibre a un revêtement acrylate car il ne tiendrait pas des températures supérieures. Par contre pour des revêtements polyimide, la gamme de température peut être élargie à −100°C, +300°C, gamme dans laquelle les variations induites sont linéaires et sans hystérésis. D'autres revêtements adaptés doivent permettre d'élargir notablement la gamme de température.

Pour obtenir de l'énergie mesurable on peut utiliser 100 points de couplage à 30 dB par exemple, ce qui donne un millième de l'intensité pour chaque remontée suivant le pulse principal dans lequel on retrouve à peu près 90% de l'énergie. La détection s'apparente à une détection cohérente où une petite impulsion "bat" avec l'impulsion principale correspondant au train d'onde principal. Par exemple, une source de 100 μW créant à un point de couplage un couplage 0,1 μW dans l'autre mode suffit pour effectuer la détection dans de bonnes conditions.

Pour contrôler la température sur 20 m, il est possible d'espacer les points de couplage de 20 cm par exemple, ou pour contrôler la température sur 300 m d'espacer les 100 points de couplage de 3 m.

L'invention s'applique donc notamment, mais pas exclusivement, au contrôle de la température sur de grandes longueurs ou dans des volumes importants.

Le décalage de l'interféromètre pour l'analyse de la loi de transmission peut être, avec $10^3$ franges $L_B$ pour 1 m, 0,5 mm pour un décalage d'une frange, soit 5 cm pour en voir 100 (du fait du trajet aller retour de la lumière via le miroir).

L'invention n'est pas limitée aux modes de réalisation précisément décrits. Notamment les points de couplage pourraient être créés par d'autres méthodes pour autant qu'ils soient créés à des points fixes, bien localisés et qu'ils ne détruisent pas la continuité du coeur de cette fibre.

## Revendications

1. Capteur de température multipoints, à fibre optique caractérisé en ce qu'il comporte :
— une source (10) optique à large bande, type diode super-luminescente, polarisée linéairement, modulée en impulsions,
— une fibre optique capteur (11), monomode et biréfringente sur laquelle ont été créés des points (Mi) de couplage faible localisés et espacés le long de la fibre (11), et dont la face d'entrée est couplée à la source (10), l'axe de polarisation de la source étant aligné avec un axe neutre de la fibre (11),
— des moyens de polarisation (12) couplés à la face de sortie de la fibre (11), pour aligner les polarisations des ondes transmises par la fibre (11),
— un dispositif d'analyse par spectroscopie (13, 14, 15, 16) couplé à la sortie des moyens de polarisation (12), pour analyser le rayonnement transmis et former la fonction de transmission du capteur,
— et des moyens de traitement (17) qui à partir de la fonction de transmission extraient les mesures des températures des segments de fibres entre points de couplage (Mi).

2. Capteur selon la revendication 1, caractérisé en ce que les moyens de polarisation sont constitués d'un polariseur (12) à fibre, directement couplé à la fibre capteur (11) et d'axe orienté à 45° des axes neutres de la fibre capteur (11).

3. Capteur selon la revendication 1, caractérisé en ce que les moyens de polarisation comportent une fibre optique (18) à conservation de polarisation couplée à la face de sortie de la fibre capteur (11), ses axes neutres étant orientés à 45° des axes de biréfringence de la fibre capteur (11), et un polariseur (19) de sortie, couplé à la fibre avec conservation de polarisation et d'axe confondu avec un axe neutre de cette fibre (18).

4. Capteur selon l'une des revendications 1 à 3, caractérisé en ce que les points de couplage (Mi) localisés sont créés sur la fibre (11) par torsion élastique puis chauffage local qui relâche la torsion.

5. Capteur selon l'une des revendications 1 à 4, caractérisé en ce que le dispositif d'analyse par spectroscopie est un interféromètre de Michelson (13-16) dont un miroir de renvoi (15) est déplaçable le long de l'axe optique de rayonnement qu'il reçoit.

6. Capteur selon la revendication 1, caractérisé en ce que les points de couplage (Mi) sont régulièrement espacés sur la fibre capteur (11).

**Patentansprüche**

1. Mehrpunkt-Temperatursonde mit Lichtleitfaser, dadurch gekennzeichnet, daß sie aufweist :
— eine breitbandige Lichtquelle (10) vom Typ einer Superlumineszenzdiode, die linear polarisiert und impulsmoduliert ist,
— eine Lichtleitfaser-Sonde (11) vom Monomode- und Bireflexionstyp, auf der schwache lokalisierte Koppelpunkte (Mi) in Abstand entlang der Faser (11) erzeugt wurden und deren Eingangsfläche an die Quelle (10) angekoppelt ist, wobei die Polarisationsachse der Quelle mit einer neutralen Achse der Faser (11) fluchtet,
— Polarisationsmittel (12), die an die Ausgangsfläche der Faser (11) gekoppelt sind, um die Polarisationen der von der Faser (11) übertragenen Wellen in Flucht zu bringen,
— eine Spektroskopie-Analysevorrichtung (13, 14, 15, 16), die an den Ausgang der Polarisationsmittel (12) angeschlossen ist, um die übertragene Strahlung zu analysieren und die Obertragungsfunktion der Sonde zu bilden,
— und Verarbeitungsmittel (17), die aufgrund der Übertragungsfunktion die Temperaturmeßwerte der Segmente der Faser zwischen Koppelpunkten (Mi) ermitteln.

2. Sonde nach Anspruch 1, dadurch gekennzeichnet, daß die Polarisationsmittel von einem Faserpolarisator (12) gebildet werden, der unmittelbar an die Sondenfaser (11) gekoppelt ist, deren Achse einen Winkel von 45° mit den neutralen Achsen der Sondenfaser (11) einschließt.

3. Sonde nach Anspruch 1, dadurch gekennzeichnet, daß die Polarisationsmittel eine Lichtleitfaser (18), die ihre Polarisation beibehält und an die Ausgangsfläche der Sondenfaser (11) gekoppelt ist, wobei die neutralen Achsen dieser Lichtleitfaser in den Polarisationsmitteln einen Winkel von 45° mit den Bireflexionsachsen der Sondenfaser (11) einschließen, und einen Ausgangspolarisator (19) aufweisen, der an die die Polarisation beibehaltende Faser gekoppelt ist und dessen Achse mit einer neutralen Achse dieser Faser (18) zusammenfällt.

4. Sonde nach einem der Ansprüche 1 bis 3, dadurch gekennzeichnet, daß die lokalisierten Koppelpunkte (Mi) auf der Faser (11) durch elastische Verdrehung und dann lokale Erhitzung erzeugt werden, wodurch die Torsionskräfte aufgehoben werden.

5. Sonde nach einem der Ansprüche 1 bis 4, dadurch gekennzeichnet, daß die Spektroskopie-Analysevorrichtung ein Michelson-Interferometer (13 bis 16) ist, dessen einer Umlenkspiegel (15) entlang der optischen Achse der Strahlung, die es empfängt, verschiebbar ist.

6. Sonde nach Anspruch 1, dadurch gekennzeichnet, daß die Koppelpunkte (Mi) gleichmäßig über die Sondenfaser (11) verteilt sind.

**Claims**

1. A multipoint temperature sensor including an optical fibre, characterized in that it comprises :
— a light source (10) of large bandwidth and of the superluminescent type which is linearly polarized and pulse-modulated,
— a monomode and bireflective optical fibre sensor (11) on which localized light coupling points have been created which are spaced out along the fibre (11), the input face of this fibre being coupled to the source (10), the polarization axis of the source being aligned with a neutral axis of the fibre (11),
— polarization means (12) coupled to the output face of the fibre (11) in order to align the polarizations of the waves transmitted by the fibre (11),
— a spectroscopic analysis device (13, 14, 15, 16), coupled to the output of the polarization means (12) in order to analyze the transmitted radiation and to establish the transmission function of the sensor,
— and processing means (17) which extract on the basis of the transmission function the temperature measurements of the fibre segments between coupling points (Mi).

2. A sensor according to claim 1, characterized in that the polarization means are constituted by a fibre polarizer (12) which is directly coupled to the sensor fibre (11) and whose axis includes a 45° angle with the neutral axes of the sensor fibre (11).

3. A sensor according to claim 1, characterized in that the polarization means comprise an optical fibre (18) which conserves its polarization and which is coupled to the output face of the sensor fibre (11), the neutral axes of the fibre (18) in the polarization means including a 45° angle with the bireflection axis of the sensor fibre (11), and an output polarizer (19) which is coupled to the fibre which conserves its polarization, the axis of this polarizer being identical to a neutral axis of this fibre (18).

4. A sensor according to one of claims 1 to 3, characterized in that the localized coupling points (Mi) are created on the fibre (11) by a resilient torsion and then by a local heating by which the torque forces are released.

5. A sensor according to one of claims 1 to 4, characterized in that the spectroscopic analysis device is a Michelson-type interferometer (13 to 16) having a mirror (15) which can be displaced along the optical axis of the incident radiation.

6. A sensor according to claim 1, characterized in that the coupling points (Mi) are regularly spaced out along the sensor fibre (11).

FIG.1

FIG.2

SPECTRE SOURCE

FIG.3

$TO_p$          $TO_i$          $TO_2$          $TO_1$

FIG.4

6

SOURCE

10

$M_1$  $M_2$ ......... $M_i$ .........    $M_n$   $M_o$

11

Y  $\vec{P}$

X'   X

Y'

Y

X'   X

Y'

14

15

19

13

18

17

CIRCUIT DE TRAITEMENT

16

DÉTECTEUR

$\vec{P'}$

FIG.6

14

15

SOURCE

$M_1$  $M_2$   ......... $M_i$   .........  $M_n$   ......  $M_o$

13

11

10

12

Y  $\vec{P}$

X'   X

Y'

Y'

X   X'

Y

$\vec{P'}$

16

DÉTECTEUR

17

CIRCUIT DE TRAITEMENT

FIG.5